# EUROPEAN PATENT APPLICATION

(11) **EP 0 624 491 A1**
(43) Date of publication of application: **17.11.1994**
(21) Application number: 94303341.5
(22) Date of filing: 10.05.1994
(51) Int. Cl.: B60P 1/02

(54) **Multiple moving deck section vehicle**

(30) Priority: 10.05.1993 GB 9309583
(71) Applicant: AVELING BARFORD (MACHINES) PLC, Northallerton, North Yorkshire DL7 8UD (GB)
(72) Inventor: Last, Stephen, Darlington CO Durham (GB)
(74) Representative: Findlay, Alice Rosemary

(57) **Abstract**

A vehicle or container (2) having a fixed deck (10) and a moveable secondary deck is described. The moveable secondary deck is formed from two or more independently moveable secondary deck sections (12). A drive system is provided for the secondary deck which comprises drive means (14) for raising/lowering the sections (12) on supply of power thereto, power supply means (50) carried on the vehicle or container body and connection means (24, 26, 28, 48) for transferal of power from the power supply means (50) to the drive means (14). The drive means may comprise a drive member (14) for each section (12), the connection means being arranged such that each drive member (14) is selectively connectable to the power supply means (50). A single power supply means (50) carried outside the load space may thus be employed selectively to power multiple drive members (14).

## Description

This invention relates to vehicles such as trailers semi-trailers lorries and vans and to containers, all for transporting goods.

Transport vehicles and containers are known in which, in addition to the fixed load deck, a secondary moveable deck is provided. The provision of a secondary moveable deck allows division of the load space into two regions with reduction of the load height in each region. This increases loading safety and reduces the weight carried by each deck and by bottom loaded goods from the goods thereabove.

In one known arrangement, the secondary deck is raised and lowered by hydraulic rams which act directly thereon. This is a costly arrangement and the rams reduce the available load space. Further the rams have to be capable of extending the full height of the vehicle or container to allow storage of the secondary deck adjacent the roof.

U.S. Patent 4642018 describes a transport vehicle with multiple moveable secondary deck sections. These can be vertically raised and then moved into either a deck-forming position, where they are located approximately mid-way between the vehicle floor and its roof, and a stowage position where they are located parallel and close adjacent to the vehicle roof.

French Patent Application 2447297 discloses a vehicle with three moveable secondary decks, one of which is driven upwards and serves to drive the others. The driven deck carries pinions which engage with toothed racks secured to the walls of the vehicle body.

A transport vehicle is also known in which, as in U.S. Patent 4642018, the secondary deck is divided into a number of sections, but in this case, each is independently moveable. A similar drive to that disclosed in French Patent Application 2447297 is employed, each secondary deck section being provided with drive chains fixed to the walls of the transport vehicle or container adjacent the deck section. In use, an electric motor is moved to a deck section to be raised or lowered and connected to a gear box in the section which transmits the drive to a sprocket arrangement. Drive cogs move along the vertical chains to achieve the desired section position. The arrangement is somewhat complicated, costly and prone to failure. A plurality of chains and supports therefor has to be provided for each section. These reduce the load space and can interfere with loading. Further the need to transport the motor to the section to be moved makes loading of the vehicle or container time inefficient and laborious.

In accordance with the invention, a vehicle or container has a fixed deck, a moveable secondary deck including two or more independently moveable secondary deck sections and a drive system for the secondary deck comprising drive means for raising/lowering the sections on supply of power thereto, power supply means carried on the vehicle or container body and connection means for transferal of power from the power supply means to the drive means.

The advantage of this is that a power supplying device does not have to be transported to each section to be moved. Instead the power supply means is carried on the vehicle or container body and connections are provided to permit transmittal of power to the drive means.

The drive means may comprise a drive member for each section, the connection means being arranged such that each drive member is selectively connectable to the power supply means. A single power supply means is thus employed selectively to power multiple drive members and thereby to raise or lower a selected deck section.

The connection means may comprise a selector device operatively connected between the power supply means and the drive members for selectively connecting the power supply means to one of the drive members and control means for the selector device for causing selective connection of the power supply means to a particular drive member. The connection means may further include a plurality of connection members each extending between the selector device and a receiver associated with a section and preferably positioned adjacent thereto, the control means being arranged to provide a signal at the receiver to cause power supply to the drive member of the section. In a particularly practical form, the receiver comprises a socket and the control means comprise a portable pendant controller with a plug engageable in the socket to thereby produce the control signal.

The drive system may include drive cables moveable around pulleys on supply of power to the drive means to raise/lower a secondary deck section. The advantage of this is that the drive system is relatively inexpensive and simple in form and does not intrude into the load space of the vehicle or container to any significant extent. The pulleys may be, and preferably are, arranged adjacent the floor and roof of the vehicle or container so that they do not interfere with loading.

The drive means may cause relative movement between two banks of pulleys to thereby cause movement of a pair of drive cables, the movement of the drive cables in turn causing movement of four drive ropes around secondary pulleys, the drive ropes each being connected to a corner of a secondary deck section thereof. The pulley banks may be attached to the under side of the floor of the vehicle or container with the secondary pulleys positioned in the corners of the load space of the vehicle or container. One pulley bank may fixed and the other moveable.

The power supply means may comprise a motor driving a hydraulic pump. The drive members suitably each comprise a single hydraulic piston and cylinder device. The selector device may then be a multi-way control valve which, in response to a control signal, provides a connection path between the hydraulic pump and a particular hydraulic piston and cylinder device.

The form of the secondary deck will be such as is appropriate for the vehicle or container. With a step frame chassis, the secondary deck may have, for example, seven sections, one in the forward step and six in the rear arranged as three pairs of sections, one section of each pair being positioned above the other.

The invention will now be further described by way of example with reference to the accompanying drawings in which:
Figure 1 is a side view of one embodiment of a semi-trailer with a step frame chassis in accordance with the invention;
Figure 2 is a view similar to Figure 1 but showing alternative secondary deck section positions;
Figure 3 is a schematic view from the side of part of the semi-trailer of Figures 1 and 2 illustrating the secondary deck drive means;
Figure 4 is a similar view to Figure 3 but from above;
Figure 5 is a similar view to Figure 3 but from one end;
Figure 6 is a side view of part of the drive means shown schematically in Figures 3 to 5;
Figure 7 is a plan view of the drive means of Figure 6;
Figure 8 is a view taken along the line C-C of Figure 6;
Figure 9 is a view taken along the line D-D of Figure 6;
Figure 10 is a schematic side view of the drive means of Figure 6 illustrating the cable run on one side thereof;
Figure 11 is a similar view to Figure 10 but showing the rope run on the other side thereof;
Figure 12 is a schematic circuit diagram illustrating the connections between the power supply means and the drive means of the semi-trailer of Figures 1 and 2;
Figure 13A and B are side views of alternative embodiments of a semi-trailer with a step frame chassis; and
Figure 14A and B are side views of two embodiments of a semi-trailer with a straight frame chassis in accordance with the invention.

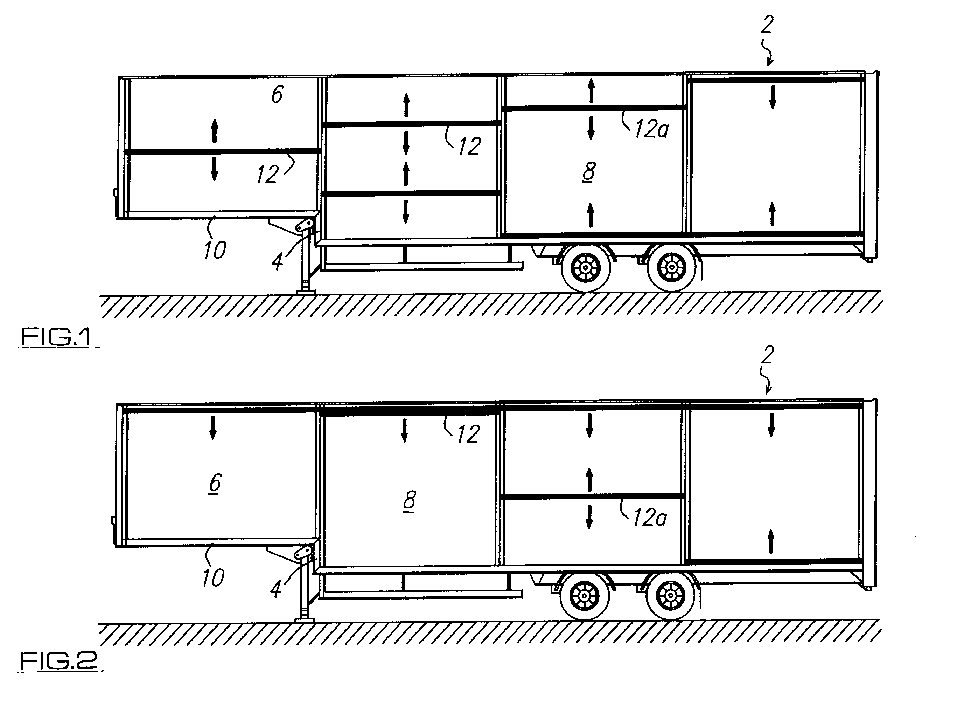

The semi-trailer 2 shown in Figures 1 and 2 has a step frame chassis 4 providing a front step-up region 6 and a rear compartment 8. The front step-up region 6 and rear compartment 8 have a fixed deck 10. In addition the front step-up compartment 6 is provided with a single moveable secondary deck section 12 whilst the rear compartment 8 is provided with six moveable secondary deck sections 12 arranged in pairs.

As is illustrated by Figures 1 and 2, many permutations of moving deck configuration are possible as a result of the plurality of independent moveable secondary deck sections 12. This gives great versatility of load space arrangement allowing total cube utilization regardless of load type and handling requirements. Further the sections 12 can be stowed away against the floor and/or roof of the semi-trailer 12 to create a conventional interior.

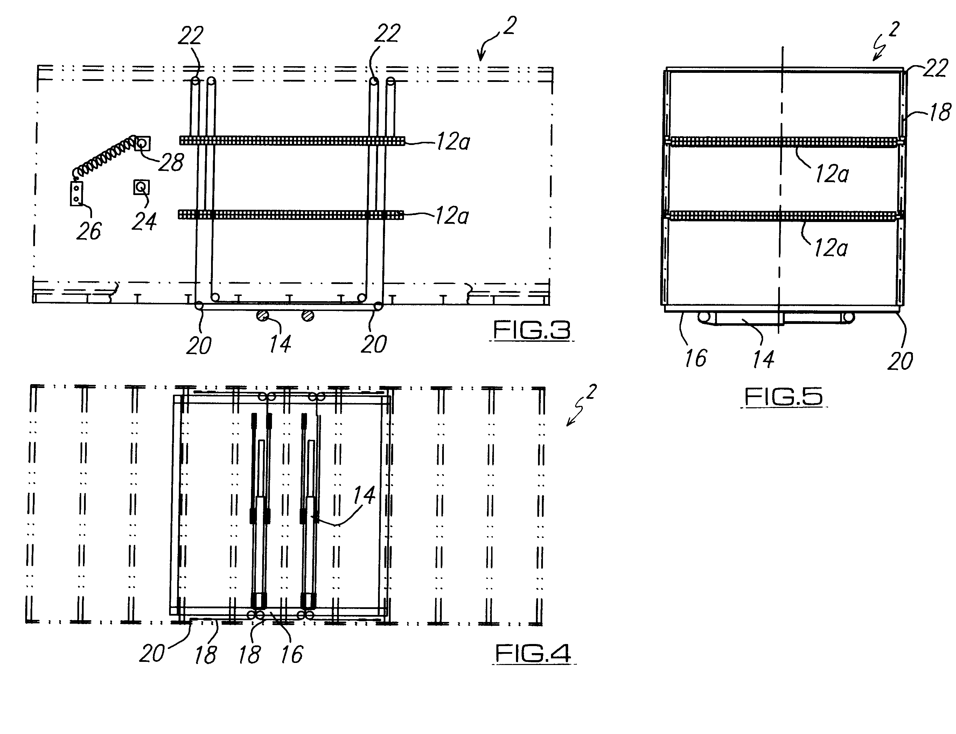

The middle pair of moving deck sections 12a are shown schematically in Figures 3 to 5. Each section 12a is provided with an associated drive member 14 in the form of a piston and cylinder device. Movement of one of the piston and cylinder devices 14 causes corresponding movement of a pair of drive cables 16, one of which extends from either end of the piston and cylinder device 14. Each drive cable 16 is connected to a pair of drive ropes 18 which pass via a first pair of pulleys 20 positioned adjacent the floor of the trailer 2 and a second pair of pulleys 22 positioned adjacent the ceiling thereof to the corners on that side of the associated secondary deck section 12a. Movement of the piston and cylinder device 14 therefore causes raising or lowering of the associated secondary deck section 12a.

The drive cables 16 may be constituted by an extension of the drive ropes 18 or vice versa.

It will be appreciated that the pulleys 20, 22 are positioned generally at the corners of the load space defined by the semi-trailer 2 whilst the piston and cylinder devices 14 are located below the fixed deck 10 thereof. Only the pulley ropes 18 extend up the walls of the load space of the trailer 2. Accordingly the reduction of available load space is minimal and there is further minimal potential for interference with loading of the load space.

Figure 3 further shows that a socket 24 is provided in a wall of the semi-trailer 2 for each deck section 12a in a position along the wall adjacent the location of the deck sections 12a relative the longitudinal extent of the load space of the semi-trailer 2. A portable pendant controller 26 with a plug 28 receivable in the sockets 24 is also provided. The purpose and effect of this will be discussed further below.

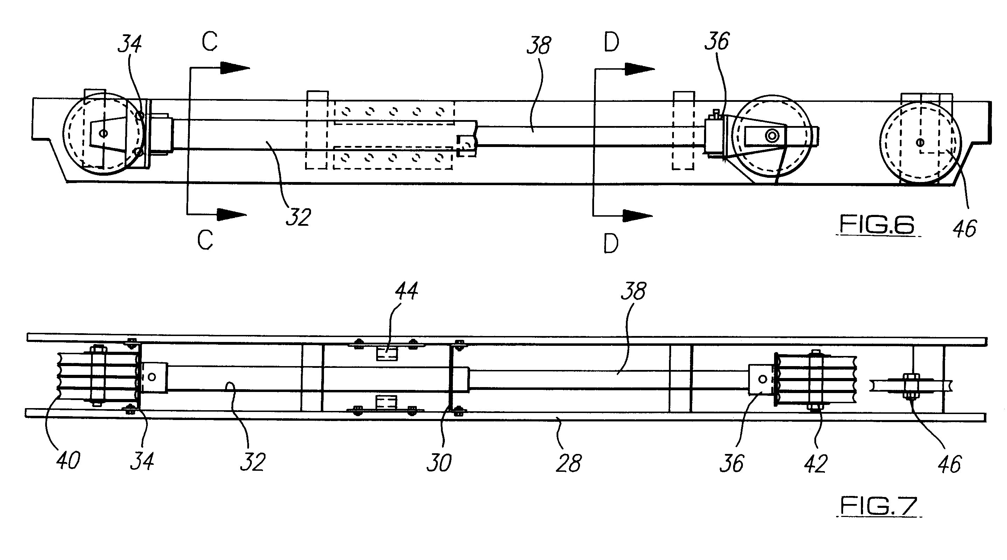

The piston and cylinder device 14 can be seen more clearly in Figures 6 to 9. The device 14 is carried by a support frame 28 via a bracket 30 connected between the cylinder 32 and the frame 28. Brackets 34, 36 are provided at the ends of the cylinder 32 and piston 38. A fixed pulley bank 40 is positioned adjacent bracket 34 whilst a moveable pulley bank 42 is secured to bracket 36. Anchor brackets 44 are provided for the pulley cables 16.

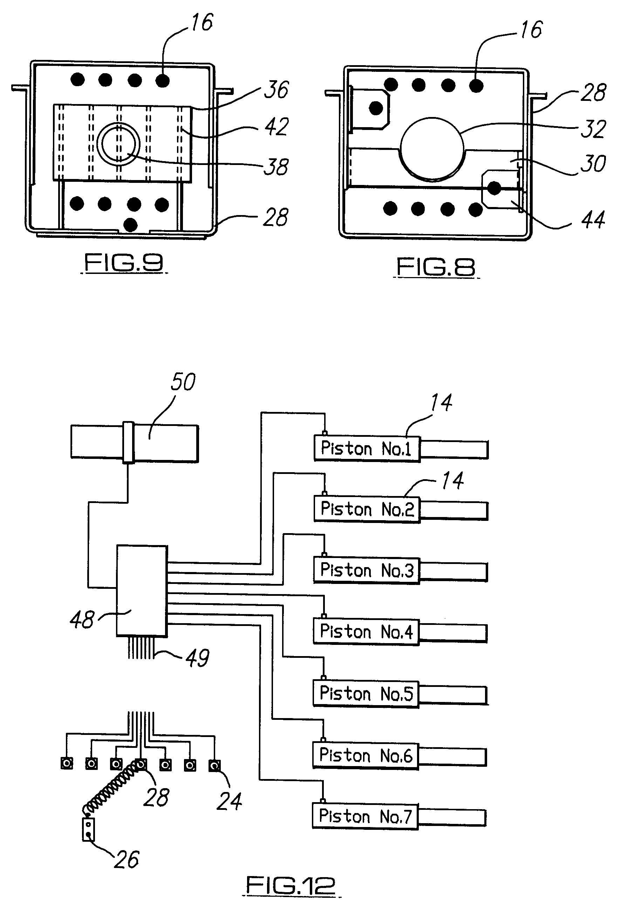

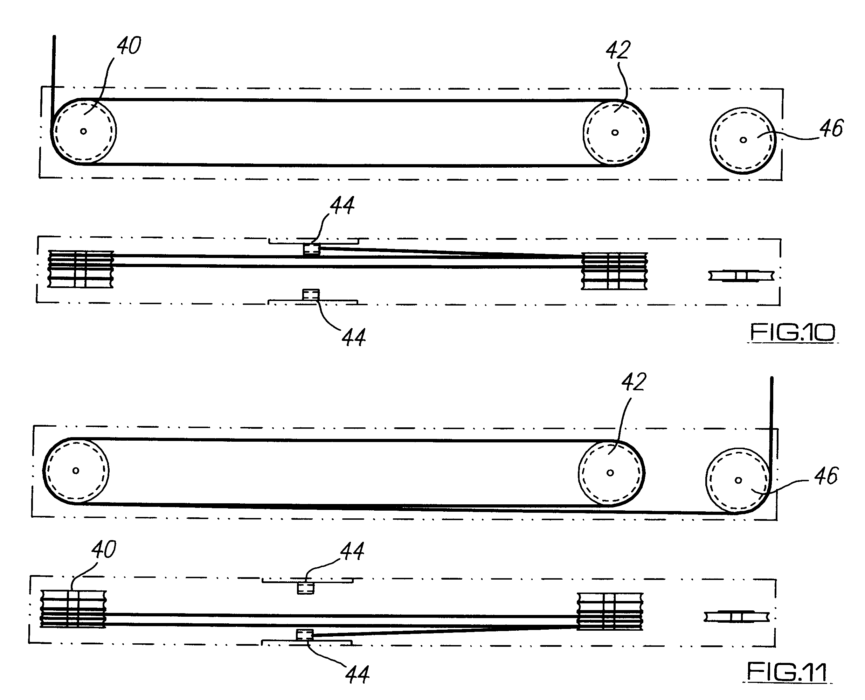

Each pulley cable 16 of the pair associated with the piston and cylinder device 14 runs around one half of the pulley banks 40, 42. The run on the half nearest the front of the semi-trailer 2, referred to as the left hand side run, is shown in Figure 10 whilst that in the half nearest the back of the semi-trailer 2, referred to as the right hand side run, is shown in Figure 11. In both runs, the pulley cables 16 extends from the appropriate anchor bracket 44 around the outer pulley on that side of pulley bank 42, around the outer pulley on that side of the pulley bank 40 and then around the inner pulley on that side of the pulley bank 42. From there, on the left hand run the pulley cable 16 passes round the inner pulley on that side of the pulley bank 40 and thence to the pulleys 20 whilst on the right hand side it passes to an auxiliary pulley 46 carried on the support frame 28 and thence again to the pulleys 20. The positions of the cables 16 can additionally be seen in Figures 8 and 9.

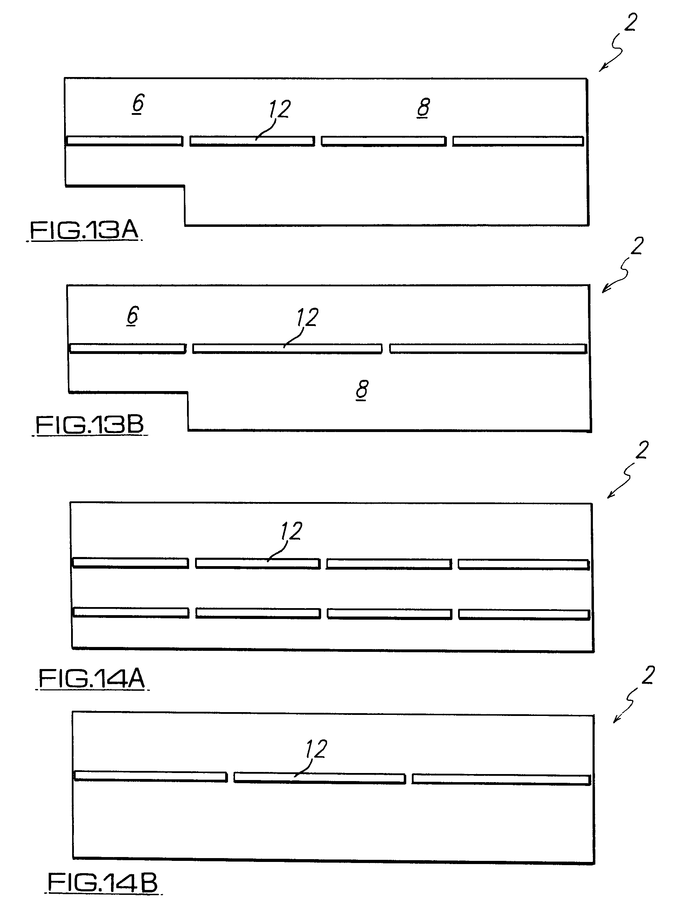

Figure 12 shows schematically the seven piston and cylinder devices 14 for the seven secondary deck sections 12. Each piston and cylinder device 14 is connected to a selector device in the form of a seven-way valve 48. The seven-way valve 48 is in turn connected to a power unit 50 comprising an electric motor which drives a hydraulic pump. Each socket 24 is also connected to the seven-way valve 48 via a connection line 49. When the plug 28 of portable pendant controller 26 is engaged in a socket 24, a signal is thereby given to the seven-way valve 48 to cause that to provide a flow passage between the associated piston and cylinder device 14 and the hydraulic pump of the power unit 50. Accordingly engagement of the controller 26 with a socket 24 associated with a particular deck section 12, via plug 28, causes hydraulic fluid to flow to or from the piston and cylinder device 14 associated with that deck section 12 to thereby raise or lower it.

The drive system described above includes seven drive members, i.e. piston and cylinder devices 14, because the vehicle of Figures 1 and 2 has seven moveable deck sections 12. It will be appreciated, however, that other secondary deck arrangements may be employed and the number of drive members provided will depend on the number of secondary deck sections. In all cases, however, a single power supply, i.e. power unit 50, will supply power to all the drive members.

Alternative secondary deck arrangements are illustrated in Figures 13 and 14. Figure 13, like Figures 1 and 2, shows a vehicle 2 with a step frame chassis but with a smaller number of secondary deck sections. In the arrangement illustrated in Figure 13A, there are four secondary deck sections 12, whilst in that illustrated in Figure 13B, there are only three. In both cases, one section 12 is provided in the front step-up region, the remaining sections being in the rear compartment 8. Figure 14, in contrast, shows a vehicle with a straight frame chassis. With the arrangement of Figure 14A, where eight secondary deck sections 12 are provided, the load space can be divided transversely into three compartments. A simpler arrangement is shown in Figure 14B, where only three secondary deck sections 12 are provided, allowing division transversely into two compartments. It will be appreciated that the deck sections 12 in the arrangements of Figures 13 and 14 do not have to be aligned. Instead, they can be offset in order that the longitudinal regions of the vehicle body are differently divided.

The system allows powering of multiple deck sections 12 with a single power unit 15, selection of the particular deck section to which power is to be supplied being simple, precise and safe. The power unit 50 may take any suitable form in particular it may form part of the power supply for a loading bay of the trailer or container or it may be dedicated to secondary deck movement. In either of these forms, the vehicle or container is self-contained and able to work in any location without the need for an external power source.

Overall the arrangement is simple in form and therefore easy to maintain. It ensures minimal intrusion into the load space thereby giving minimal load space reduction and minimal chance of loading being impeded.

## Claims

1. A vehicle or container (2) having a fixed deck (10), a moveable secondary deck including two or more independently moveable secondary deck sections (12) and a drive system for the secondary deck comprising drive means (14) for raising/lowering the sections (12) on supply of power thereto, power supply means (50) carried on the vehicle or container body and connection means (24, 26, 28, 48) for transferal of power from the power supply means to the drive means.

2. A vehicle or container as claimed in Claim 1, wherein the drive means comprises a drive member (14) for each section (12), the connection means (24, 26, 28, 48) being arranged such that each drive member (14) is selectively connectible to the power supply means (50).

3. A vehicle or container as claimed in Claim 2, wherein the connection means comprises a selector device (48) operatively connected between the power supply means (50) and the drive members (14) for selectively connecting the power supply means (50) to one of the drive members (14) and control means (26, 28) for the selector device (48) for causing selective connection of the power supply means (50) to a given, specific, drive member (14).

4. A vehicle or container as claimed in Claim 3, wherein the connection means includes a plurality of connection members (49), each extending between the selector device (48) and a receiver (24) associated with each section (12), the control means (26, 28) being arranged to provide a signal at a receiver (24) to cause power supply to the drive member (14) of the associated section (12).

5. A vehicle or container as claimed in Claim 4, wherein each receiver comprises a socket (24) and the control means comprises a portable pendant controller (26) with a plug (28) engageable in the socket (24) to thereby produce the control signal.

6. A vehicle or container as claimed in any one of Claims 2 to 5, wherein the drive members comprise hydraulic piston and cylinder devices (14).

7. A vehicle or container as claimed in Claim 6, wherein the power supply means (50) comprises a motor driving a hydraulic pump.

8. A vehicle or container as claimed in either Claim 6 or 7 when dependent on any one of Claims 3 to 5, wherein the selector device comprises a multiple-way control valve (48).

9. A vehicle or container as claimed in any preceding Claim, wherein the drive system includes drive cables (16) moveable around pulleys (20, 22, 40, 42, 46) to raise/lower the sections (12) on supply of power to the drive means.

10. A vehicle or container as claimed in Claim 9, wherein the drive means (14) cause relative movement between two banks of pulleys (40, 42) to thereby cause movement of a pair of drive cables (16) which are connected to a secondary deck section (12) thereby to raise/lower the section (12).

11. A vehicle or container as claimed in Claim 10, wherein one pulley bank (40) is fixed and the other pulley bank (42) is moveable.
